# FASCICULE DE BREVET EUROPEEN

(11) **EP 1 052 822 B1**
(45) Date de publication et mention de la délivrance du brevet: **11.11.2009**
(21) Numéro de dépôt: 00201577.4
(22) Date de dépôt: 02.05.2000
(51) Int. Cl.: H04L 27/26, H04L 27/00

(54) **Démodulateur numérique programmable pour modulations OFDM**
Programmierbarer digitaler OFDM demodulator
Programmable OFDM digital demodulator

(30) Priorité: 11.05.1999 FR 9906018
(43) Date de publication de la demande: 15.11.2000
(73) Titulaire: NXP B.V., 5656 AG Eindhoven (NL)
(72) Inventeur: Dujardin, Eric, 75008 Paris (FR); Gay-Bellile, Olivier, 75008 Paris (FR)
(74) Mandataire: Williamson, Paul Lewis

(56) Documents cités:
- EP-A- 0 340 978
- EP-A- 0 353 890

## Description

L'invention concerne un système de transmission comportant au moins un émetteur et un récepteur, ledit récepteur comportant un démodulateur numérique de données. L'invention concerne également un récepteur et un démodulateur destinés à être utilisés dans un tel système.

L'invention a d'importantes applications dans le domaine des modulations numériques.

Le projet de norme DVB-T (de l'anglais Digital Video Broadcasting for Terrestrial) défini par l'ETSI et relatif à la diffusion de programmes de télévision numériques par liaisons hertziennes décrit un exemple d'un tel système de transmission. Notamment, ce projet prévoit l'utilisation de modulations multiporteuses, qui permettent d'utiliser au mieux les caractéristiques du canal de transmission.

Or l'utilisation de modulations multiporteuses pose un problème particulier. En effet, la technique de transmission mutliporteuses consiste à multiplexer en fréquence N porteuses qui sont modulées par des points d'une constellation (par exemple des points d'une constellation MAQ). Chaque symbole transmis (appelé symbole FDM de l'anglais "Frequency Division Multiplexing") correspond donc à un bloc de N points, chaque point du bloc modulant l'une des N porteuses. Dans le cas de transmissions multiporteuses, la fréquence d'échantillonnage du signal transmis est donc très supérieure à la fréquence des symboles FDM. Au niveau du démodulateur, certaines fonctions de démodulation s'effectuent à une fréquence de l'ordre de la fréquence d'échantillonnage des données reçues, tandis que d'autres s'effectuent à une fréquence de l'ordre de la fréquence symbole.

Par ailleurs, il est souhaitable d'utiliser un modèle de communication statique pour gérer les échanges de données à l'intérieur d'un tel démodulateur. Utiliser un modèle de communication statique consiste à réaliser des fonctions déterminées, à des instants déterminés, en exécutant des programmes qui se répètent à une même fréquence, de façon à pouvoir fournir des données à un rythme régulier. Ce type de modèle de communication est avantageux car il permet de garantir que toutes les données sont transmises correctement et donc que les fonctions sont exécutées correctement.

Lorsque l'architecture d'un démodulateur pour modulations multiporteuses est une architecture statique, on est donc amené à choisir comme fréquence de répétition commune la fréquence la plus faible parmi les fréquences susceptibles d'être utilisées, c'est-à-dire une fréquence qui est de l'ordre de la fréquence symbole. Cela implique de mémoriser un très grand nombre d'instructions. En particulier les instructions relatives au traitement des différentes porteuses devront être mémorisées autant de fois qu'il y a de porteuses. Cette solution est extrêmement coûteuse en mémoire.

L'invention a pour but de proposer un démodulateur qui apporte une solution à ce problème.

Ce but est atteint avec un système de transmission, un récepteur et un démodulateur tels que décrits dans les paragraphes introductifs, et caractérisés en ce que ce démodulateur pour modulations multiporteuses comporte:
- un premier module agencé pour le traitement de premières fonctions de démodulation conformément à au moins un premier programme qui se répète à une première fréquence,
- un second module agencé pour le traitement de secondes fonctions de démodulation conformément à au moins un second programme qui se répète à une seconde fréquence différente de la première fréquence,
- et un module d'interface pour échanger des données entre lesdits modules.

Le module d'interface comporté des moyens de sélection pour sélectionner les données à transmettre au second module. Le récepteur est destiné à recevoir des données formatées en blocs, chaque bloc contenant des données utiles et des informations de contrôle. Les moyens de sélection sont agencés pour sélectionner au moins certaines informations de contrôle. La seconde fréquence est de l'ordre de la fréquence des blocs.

L'invention consiste donc à séparer l'architecture du démodulateur en deux parties communiquant par l'intermédiaire d'une interface. Dans le cas de modulations multiporteuses, l'une de ces parties (le premier module) est dédiée au traitement des fonctions qui doivent s'effectuer à une fréquence de l'ordre de la fréquence d'échantillonnage. L'autre partie (le second module) est dédiée au traitement des fonctions qui doivent s'effectuer à une fréquence de l'ordre de la fréquence symbole. Les programmes de fonctionnement du premier module ont une fréquence de répétition de l'ordre de la fréquence d'échantillonnage. En conséquence, les instructions relatives au traitement des différentes porteuses ne sont mémorisées qu'un nombre minimum de fois. La taille mémoire nécessaire pour le stockage desdits programmes est donc réduite à une taillé minimum.

L'invention présente en plus l'avantage de fournir une architecture qui est utilisable pour des systèmes de transmission qui utilisent des modulations monoporteuses, par exemple pour des systèmes de transmission par câble ou par satellite. Dans ce type de système la fréquence d'échantillonnage et la fréquence symbole sont du même ordre de grandeur de telle sorte que le problème évoqué ci-dessus ne se pose pas. Dans ce cas, seul l'un des modules est utilisé (le premier module). Et les programmes de fonctionnement de ce module ont une fréquence de répétition de l'ordre de la fréquence symbole

Il convient de noter que EP-A-0 353 890 décrit un système de serveurs qui fournit des service d'information de télécomunication entre un centre de traitement d'information et une multitude de terminaux d'utilisateurs qui sont équipés différemment et qui sont reliés à distance avec le centre via des parties d'un réseau de téléphone publique, Le système comprend un processeur numérique qui reçoit et traite des signaux provenant du réseau et un autre processeur numérique qui initie des traitements de conversion des signaux d'information sortants. Les processeurs accèdent une mémoire de programme commune d'une façon temporellement imbriquée.

EP-A-0 340 978 décrit un appareil modulateur/démodulateur qui comprend deux processeurs numériques. Un processeur numérique effectue les fonctions du transmetteur dans l'appareil tandis qu'un autre processeur effectue les fonctions du récepteur. L'appareil emploi une logiciel qui, en temps réel, fonctionne avec un degré de concomitance et de parallélisme élevé.

L'invention sera mieux comprise et d'autres détails apparaîtront dans la description qui va suivre en regard des dessins annexés qui sont donnés à titre d'exemple non limitatif et dans lesquels:
- la figure 1 représente un exemple de système de transmission selon l'invention,
- la figure 2 représente la structure d'un symbole FDM,
- la figure 3 est un schéma de l'architecture d'un démodulateur numérique selon l'invention,
- la figure 4 est un schéma explicatif de la gestion des communications internes dans un démodulateur tel que représenté sur la figure 3,
- la figure 5 est un schéma d'un exemple de module d'interface d'un démodulateur selon l'invention,
- la figure 6 est un schéma d'un démodulateur OFDM selon l'invention -
- la figure 7 est un schéma d'un démodulateur selon pour les modulations monoporteuses utilisées dans les systèmes de diffusion de programmes numériques par câble ou par satellite définis par les projets de normes DVB.

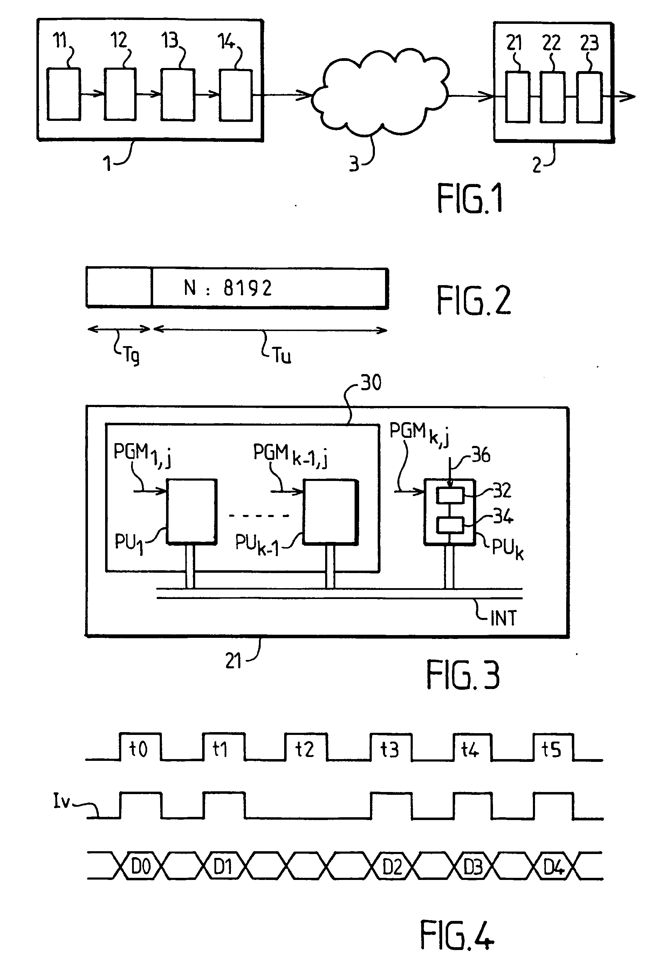

Sur la figure 1 on a représenté un exemple de système de transmission numérique selon l'invention entre un émetteur 1 et un récepteur 2 via un média de transmission 3. L'émetteur 1 comporte une source de données 11, un codeur de source 12, un codeur de canal 13, et un modulateur numérique 14. Le récepteur 2 comporte un démodulateur numérique 21, un décodeur de canal 22, et un décodeur de source 23. Le média de transmission 3 peut être de différentes natures, par exemple, il peut s'agir d'un réseau câblé, d'un canal satellite ou d'un canal hertzien. La modulation utilisée est choisie en fonction du média de transmission pour tenir compte au mieux des caractéristiques du média de transmission. En particulier, on utilise des modulations monoporteuses pour les transmissions par câble et par satellite, et des modulations multiporteuses pour les transmissions hertziennes parce que la technique de modulation multiporteuses offre une bonne protection contre la sélectivité des canaux hertziens, la propagation multi-chemins et les interférences entre canaux hertziens.

Dans le cas du projet de norme DVB-T défini par l'ETSI, les modulations multiporteuses utilisées sont des modulations OFDM (de l'anglais "Orthogonal Frequency Division Multiplexing"). La technique OFDM consiste à multiplexer en fréquence N porteuses orthogonales qui sont modulées par des points d'une constellation (par exemple des points d'une constellation MAQ). Chaque symbole transmis (appelé symbole OFDM) correspond donc à un bloc de N points, chaque point du bloc modulant l'une des N porteuses orthogonales.

Sur la figure 2 on a représenté la structure d'un exemple de symbole OFDM tel que défini dans le projet de norme DVB-T. Chaque symbole est composé d'un intervalle de garde Tg suivi d'une partie utile Tu. L'intervalle de garde Tg sert à éliminer l'interférence entre les symboles. La partie utile contient N=8192 échantillons. Ces 8192 échantillons correspondent à 6817 porteuses utiles. Et parmi ces 6817 porteuses utiles, certaines véhiculent des données et d'autres des informations de contrôle. La nature d'une porteuse (porteuse utile, porteuse de données ou porteuse d'informations de contrôle) est déterminée par son emplacement dans le symbole OFDM. Les porteuses d'informations de contrôle sont essentiellement utilisées pour la synchronisation et l'estimation de canal. Certains des traitements à effectuer sur ces porteuses s'effectuent donc à une fréquence de l'ordre de la fréquence symbole. En revanche les traitements à effectuer sur les porteuses de données utiles s'effectuent tous à une fréquence de l'ordre de la fréquence d'échantillonnage.

Sur la figure 3 on a représenté un schéma de principe de l'architecture d'un démodulateur numérique 21 selon l'invention. Le démodulateur 21 comporte une pluralité d'unité de calcul PUᵢ (i=1, ..., K) commandées par des programmes PGM_{i,j} (j=1,...,Lᵢ) qui se répètent à une première fréquence. Ces unités de calcul PUᵢ communiquent entre elles par l'intermédiaire d'un réseau d'interconnexion INT.

Le démodulateur numérique décrit ici est un démodulateur programmable qui peut être programmé de façon à être utilisé pour différents types de modulations. Cela implique notamment que la fréquence symbole n'est pas connue à priori. L'architecture utilisée étant une architecture statique, des instants périodiques de communication (t0, t1, ...) sont prévus pour transférer des données (D0, D1,...) d'une unité de calcul à une autre (voir figure 4), indépendamment de la valeur de la fréquence symbole. Il peut donc arriver qu'aucune donnée ne soit disponible alors qu'une communication doit avoir lieu (par exemple à l'instant t2). Un indicateur de validité Iv est donc associé à chaque intervalle de communication pour informer l'unité de calcul qui attend une donnée s'il y a ou non une donnée dans cet intervalle de temps de communication. Par exemple à l'instant t2, comme aucune donnée n'est disponible l'indicateur de validité a une valeur nulle.

Les unités de calcul PU_{i (i=1,...,K-1)} constituent un premier module 30. Elles traitent des premières fonctions de démodulation conformément aux programmes PGM_{i,j} qui se répètent à une première fréquence. L'unité de calcul PU_{K} comporte un second module 32 et un module d'interface 34. Le second module 32 est susceptible de traiter des secondes fonctions de démodulation selon un ou plusieurs programmes 36 qui se répètent à une seconde fréquence.

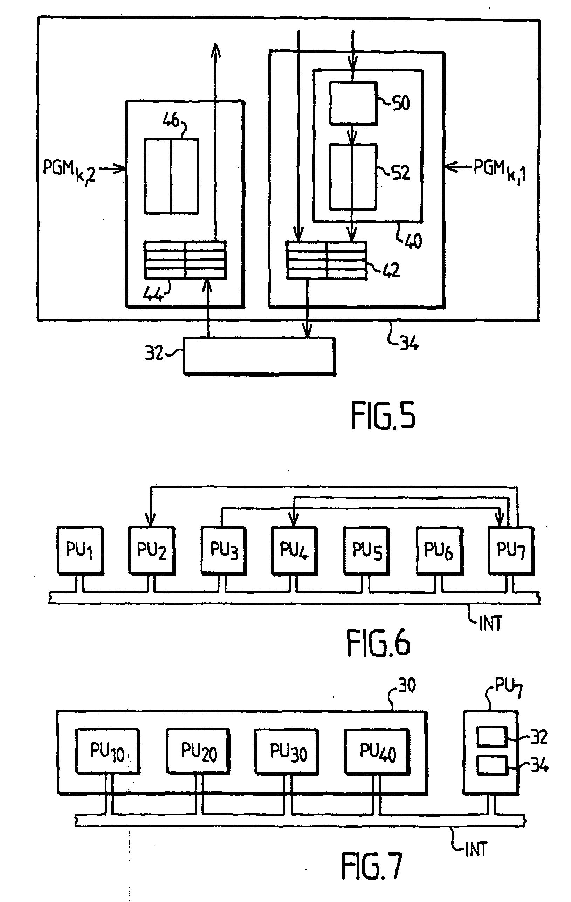

Un exemple de réalisation d'un module d'interface 34 est représenté en détails sur la figure 5. Il comporte des moyens de sélection 40 pour sélectionner des données à transmettre, une mémoire FIFO 42 pour mémoriser les données à transmettre au second module 32, une mémoire FIFO 44 pour mémoriser des résultats fournis par le second module, et des moyens 46 de transmission pour transmettre au premier module 30 les résultats stockés dans la mémoire 44. Ce module d'interface 34 est contrôlé par des programmes PGM_{K,j} notamment par un programme d'écriture PGM_{K,1} et par un programme de lecture PGM_{K,2}.

Les données reçues par l'unité de calcul PU_{K} sont soit des symboles contenant N porteuses, soit des données quelconques qui doivent être transmises telles quelles au second module 32. Les moyens de sélection 40 sont utilisés lorsque la donnée reçue est un symbole, pour sélectionner, dans ce symbole, les porteuses à transmettre au second module 32 (seules les porteuses d'informations de contrôle doivent être transmises). Les moyens de sélection 40 sont commandés par le programme d'écriture PGM_{K,1}. Ils comportent un compteur 50 et une table 52. Le compteur 50 numérote, dans leur ordre d'apparition, les porteuses contenues dans le symbole. La table 52 contient pour chaque numéro de porteuse un identificateur de transfert It qui indique si la porteuse correspondante doit ou non être transmise au second module 32, c'est-à-dire si elle doit être copiée dans la mémoire FIFO 42.

Les données autres que les symboles, susceptibles d'être transmises du premier module 30 vers le second module 32, sont copiées directement dans la mémoire FIFO 42.

La mémoire FIFO 42 contient d'une part les données à transmettre au second module 32, et d'autre part pour chaque donnée un identificateur de fonction If indiquant la fonction source et / ou la fonction destination de la donnée. Cet identificateur de fonction If permet au second module 32 de savoir où mémoriser la donnée correspondante pour son traitement ultérieur.

Le second module 32 exécute une ou plusieurs fonctions qui fournissent des résultats. Ces résultats sont stockés dans la mémoire FIFO 44, avec un identificateur de fonction If qui indique la fonction source et / ou la fonction destination du résultat. Cet identificateur de fonction If permet de gérer, avec les moyens de transmission 46, l'instant de communication auquel un résultat doit être transmis au premier module 30.

Les moyens de transmission 46 sont contrôlés par le programme de lecture PGM_{K,2}. Le programme PGM_{K,2} comporte des instructions qui indiquent le type de communication qui doit avoir lieu à l'instant de communication considéré. Chaque type de communication correspond à la transmission d'un résultat d'un certain type. Le type d'un résultat est indiqué par identificateur de fonction If qui lui est associé. Les moyens de transmission 46 sont constitués par une table de correspondance qui indique la correspondance entre un type de communication et le ou les types de résultats à transmettre. Par exemple on peut avoir deux types de communications différentes C₁ et C₂, une communication de type C₁ correspondant à la transmission d'un résultat dont l'identificateur de fonction If est égal à Z1 ou à Z2, et une communication de type C₂ correspondant à la transmission d'un résultat dont l'identificateur de fonction est égale à Z3. Pour chaque instant de communication le programme de lecture PGM_{K,2} consulte la table de correspondance pour déterminer si identificateur de fonction du résultat de sortie de la mémoire FIFO 44 correspond au type de la communication. Dans ce cas le résultat de sortie de la mémoire FIFO est transféré vers le premier module, avec un identificateur de validité Iv égal à un. Et le programme de lecture passe à la donnée suivante. Dans le cas contraire, le résultat de sortie n'est pas transféré (ce qui signifie qu'il reste dans la mémoire FIFO) et l'indicateur de validité Iv associé à l'instant de communication courant est positionné à zéro. Ce mécanisme permet de garantir que les résultats sont transmis dans des instants de communication corrects par rapport aux besoins du premier module 30.

La figure 6 représente un exemple de démodulateur OFDM selon l'invention. Dans ce cas, les unités de calcul du premier module 30 traitent les fonctions de démodulation qui s'effectuent à une fréquence de l'ordre de la fréquence d'échantillonnage. Elles sont commandées par des programmes PGM_{i,j} qui se répètent à une fréquence de l'ordre de la fréquence d'échantillonnage. Ces unités de calcul sont essentiellement constituées par une unité de calcul PU₁ qui transpose le signal reçu en bande de base, une unité de calcul PU₂ qui effectue les traitement relatifs à la synchronisation, une unité de calcul PU₃ qui effectue essentiellement l'opération de transformée de Fourier inverse pour la récupération des symboles, une unité de calcul PU₄ chargée de la correction de canal, une unité PU₅ qui est une mémoire de délai servant à stocker un symbole pendant l'opération de correction de canal, et une unité PU₆ de décodage. Le module d'interface 34 et le second module 32 sont regroupés dans une unité de calcul PU₇. Le second module 32 traitent les fonctions de démodulation qui s'effectuent à une fréquence de l'ordre de la fréquence symbole. Il est commandé par les programmes 36 qui se répètent à une fréquence de l'ordre de la fréquence symbole. Les échanges entre le premier module 30 et le second module 32 s'effectuent par exemple de la façon suivante:
- l'unité PU₃ transmet des symboles à l'unité PU₇,
- l'unité PU₇ transmet à l'unité PU₂ des résultats relatifs à la synchronisation,
- l'unité PU₇ transmet à l'unité PU₄ des résultats relatifs à la correction de canal.

Sur la figure 7 on a représenté un exemple de démodulateur pour modulations monoporteuses. Ce démodulateur comporte un premier module 30, un second module 32 et un module d'interface 34. Le premier module 30 comporte essentiellement une unité de calcul PU₁₀ qui transpose le signal reçu en bande de base, une unité de calcul PU₂₀ qui effectue les traitements relatifs à la synchronisation, une unité de calcul PU₃₀ qui effectue des opérations de filtrage pour la récupération des symboles, et une unité PU₄₀ de décodage. Le module d'interface 34 et le second module 32 sont regroupés dans une unité de calcul PU₇. L'unité de calcul PU₇ n'est pas utilisée. Toutes les fonctions de démodulation sont traitées par le premier module 30. Les programmes qui gèrent le fonctionnement des unités de calcul PU₁₀, PU₂₀, PU₃₀ et PU₄₀ se répètent à une fréquence de l'ordre de la fréquence symbole.

On a décrit un démodulateur numérique programmable, utilisable pour différents types de modulations. Mais l'invention n'est pas restreinte à cet exemple. Elle est en particulier applicable à un démodulateur OFDM travaillant à une fréquence symbole prédéterminée, et dans lequel les communications (notamment les instants de communication auxquels les données doivent être transmises) sont plus simples à gérer que dans l'exemple qui a été décrit. Il est clair que dans ce cas le module d'interface peut être simplifié par rapport à celui qui a été décrit.

De même, si toutes les données transmises du premier module 30 vers le second module 32 sont issues de la même unité de calcul, par exemple si les seules données transmises sont les symboles issus de l'unité chargée des calculs de transformée de Fourier, il est inutile de mémoriser dans la mémoire FIFO 42 un identificateur de fonction indiquant la fonction source et / ou destination de la donnée.

## Revendications

1. Système de transmission comportant au moins un émetteur et un récepteur, ledit récepteur comportant un démodulateur numérique de données pour modulations multiporteuses, **caractérisé en ce que** ledit démodulateur comporte:
- un premier module (30) agencé pour le traitement de premières fonctions de démodulation conformément à au moins un premier programme (PGMi) qui se répète à une première fréquence,
- un second module (32) agencé pour le traitement de secondes fonctions de démodulation conformément à au moins un second programme (36) qui se répète à une seconde fréquence différente de la première fréquence, et un module d'interface (34) pour échanger des données entre lesdits modules, ledit module d'interface comportant des moyens de sélection (40) pour sélectionner les données à transmettre au seconde modules dans lequel
- le récepteur est destiné à recevoir des données formatées en blocs, chaque bloc contenant des données utiles et des informations de contrôle,
- les de sélection sont agencés pour sélectionner au moins certaines informations de contrôle, et
- ladite seconde fréquence est de l'ordre de la fréquence desdits bloc.

2. Système de transmission selon la revendication 1, **caractérisé en ce que** ledit module d'interface comporte au moins une mémoire (42, 44) de type FIFO.

3. Récepteur comportant un dèmodulaleur numérique de données pour modulations multiporteuses, **caractérisé en ce que** ledit démodulateur comporte:
- un premier module (30)agencé pour le traitement de premières fonctions de démodulation conformément à au moins un premier programme (PGMi,j) qui se répète à une première fréquence,
- un second module (32) agencé pour le traitement de secondes fonctions de démodulation conformément à au moins un second programme (PGMK,j) qui se répète à une seconde fréquence différente de la première fréquence,
- et un module d'interface (34) pour échanger des données entre lesdits modules, ledit module d'interface comportant des moyens de sélection (40) pour sélectionner les données à transmettre au second module,
dans lequel
- le récepteur est destiné à recevoir des données formatées en blocs, chaque bloc contenant des données utiles et des informations de contrôle,
- les moyens de sélection sont agencés pour sélectionner au moins certaines informations de contrôle, et
- ladite seconde fréquence est de l'ordre de la fréquence desdits blocs.

4. Démodulateur numérique de données pour modulations multiporteuses **caractérisé en ce qu'**il comporte:
- un premier module (30) agencé pour le traitement de premières fonctions de démodulation conformément à au moins un premier programme (PGMi,j) qui se répète à une première fréquence,
- un second module (32) agencé pour le traitement de secondes fonctions de démodulation conformément à au moins un second programme (PGMK,j) qui se répète à une seconde fréquence différente de la première fréquence,
- et un module d'interface (34) pour échanger des données entre lesdits modules, ledit module d'interface comportant des moyens de sélection (40) pour sélectionner les données à transmettre au second module,
dans lequel
- le récepteur est destiné à recevoir des données formatées en blocs, chaque bloc contenant des données utiles et des informations de contrôle,
- les moyens de sélection sont agencés pour sélectionner au moins certaines informations de contrôle, et
- ladite seconde fréquence est de l'ordre de la fréquence desdits blocs.

## Claims

1. A transmission system comprising at least a transmitter and a receiver, said receiver comprising a digital data demodulator for multicarrier modulations, **characterized in that** said demodulator comprises:
- a first module (30) designed for carrying out first demodulation functions in accordance with at least a first program (PGMi,j) which is repeated with a first frequency,
- a second module (32) designed for carrying out second demodulation functions in accordance with at least a second program (36) which is repeated with a second frequency which is different from the first frequency, and an interface module (34) for exchanging data between said modules, said interface module comprising selection means (40) for selecting the data to be transmitted to the second module in which
- the receiver is intended for receiving block-formated data, each block containing useful data and check data,
- the selection means are designed for selecting at least certain check data, and
- said second frequency is of the order of the frequency of said blocks.

2. A transmission system as claimed in claim 1, **characterized in that** said interface module comprises at least a memory (42, 44) of the FIFO type.

3. A receiver comprising a digital data demodulator for multicarrier modulations, **characterized in that** said demodulator comprises:
- a first module (30) designed for carrying out first demodulation functions in accordance with at east a first program (PGMi,j) which is repeated with a first frequency,
- a second module (32) designed for carrying out second demodulation functions in accordance with at least a second program (PGMK,j) which is repeated with a second frequency which is different from the first frequency, and
- an interface module (34) for exchanging data between said modules, said interface module comprising selection means (40) for selecting the data to be transmitted to the second module in which
- the receiver is intended for receiving block-formated data, each block containing useful data and check data,
- the selection means are designed for selecting at least certain check data, and
- said second frequency is of the order of the frequency of said blocks.

4. A digital data demodulator for multicarrier modulations, **characterized in that** it comprises:
- a first module (30) designed for carrying out first demodulation functions in accordance with at least a first program (PGMi,j) which is repeated with a first frequency,
- a second module (32) designed for carrying out second demodulation functions in accordance with at least a second program (PGMK,j) which is repeated with a second frequency which is different from the first frequency, and
- an interface module (34) for exchanging data between said modules, said interface module comprising selection means (40) for selecting the data to be transmitted to the second module in which
- the receiver is intended for receiving block-formated data, each block containing useful data and check data,
- the selection means are designed for selecting at least certain check data, and
- said second frequency is of the order of the frequency of said blocks.

## Patentansprüche

1. Übertragungssystem, das wenigstens einen Sender und einen Empfänger umfasst, wobei der Empfänger einen digitalen Daten-Demodulator für Mehrfachträger-Modulationen enthält, **dadurch gekennzeichnet, dass** der Demodulator umfasst:
- ein erstes Modul (30), das für die Verarbeitung erster Demodulationsfunktionen gemäß wenigstens einem ersten Programm (PGMi), das mit einer ersten Frequenz wiederholt wird, ausgelegt ist,
- ein zweites Modul (32), das für die Verarbeitung zweiter Demodulationsfunktionen gemäß wenigstens einem zweiten Programm (36), das mit einer von der ersten Frequenz verschiedenen zweiten Frequenz wiederholt wird, ausgelegt ist, und ein Schnittstellenmodul (34), um Daten zwischen den Modulen auszutauschen, wobei das Schnittstellenmodul Auswahlmittel (40) umfasst, um die an das zweite Modul zu übertragenden Daten auszuwählen, in dem
- der Empfänger dazu bestimmt ist, in Blöcken formatierte Daten zu empfangen, wobei jeder Block Nutzdaten und Steuerinformationen enthält,
- die Auswahlmittel dazu ausgelegt sind, wenigstens bestimmte Steuerfunktionen auszuwählen und
- die zweite Frequenz in der Größenordnung der Frequenz der Blöcke liegt.

2. Übertragungssystem nach Anspruch 1, **dadurch gekennzeichnet, dass** das Schnittstellenmodul wenigstens einen Speicher (42, 44) des FIFO-Typs umfasst.

3. Empfänger, der einen digitalen Daten-Demodulator für Mehrfachträger-Modulationen umfasst, **dadurch gekennzeichnet, dass** der Demodulator umfasst:
- ein erstes Modul (30), das für die Verarbeitung erster Demodulationsfunktionen gemäß wenigstens einem ersten Programm (PGMi,j), das mit einer ersten Frequenz wiederholt wird, ausgelegt ist,
- ein zweites Modul (32), das für die Verarbeitung zweiter Demodulationsfunktionen gemäß wenigstens einem zweiten Programm (PGMK,j), das mit einer von der ersten Frequenz verschiedenen zweiten Frequenz wiederholt wird, ausgelegt ist,
- und ein Schnittstellenmodul (34), um Daten zwischen den Modulen auszutauschen, wobei das Schnittstellenmodul Auswahlmittel (40) umfasst, um die an das zweite Modul zu übertragenden Daten auszuwählen,
in dem
- der Empfänger dazu bestimmt ist, in Blöcken formatierte Daten zu empfangen, wobei jeder Block Nutzdaten und Steuerinformationen enthält,
- die Auswahlmittel dazu ausgelegt sind, wenigstens bestimmte Steuerinformationen auszuwählen, und
- die zweite Frequenz in der Größenordnung der Frequenz der Blöcke liegt.

4. Digitaler Daten-Demodulator für Mehrfachträger-Modulationen, **dadurch gekennzeichnet, dass** er umfasst:
- ein erstes Modul (30), das für die Verarbeitung erster Demodulationsfunktionen gemäß wenigstens einem ersten Programm (PGMi,j), das mit einer ersten Frequenz wiederholt wird, ausgelegt ist,
- ein zweites Modul (32), das für die Verarbeitung zweiter Demodulationsfunktionen gemäß wenigstens einem zweiten Programm (PGMK,j), das mit einer von der ersten Frequenz verschiedenen zweiten Frequenz wiederholt wird, ausgelegt ist,
- und ein Schnittstellenmodul (34), um die Daten zwischen den Modulen auszutauschen, wobei das Schnittstellenmodul Auswahlmittel (40) umfasst, um die an das zweite Modul zu übertragenden Daten auszuwählen,
in dem
- der Empfänger dazu bestimmt ist, in Blöcken formatierte Daten zu empfangen, wobei jeder Block Nutzdaten und Steuerinformationen enthält,
- die Auswahlmittel dazu ausgelegt sind, wenigstens bestimmte Steuerinformationen auszuwählen, und
- die zweite Frequenz in der Größenordnung der Frequenz der Blöcke liegt.
